# EUROPÄISCHE PATENTSCHRIFT

(11) **EP 2 879 904 B1**
(45) Veröffentlichungstag und Bekanntmachung des Hinweises auf die Patenterteilung: **12.09.2018**
(21) Anmeldenummer: 13740033.9
(22) Anmeldetag: 25.07.2013
(51) Int. Cl.: B60N 2/015, B60N 2/36

(54) **VERRIEGELUNGSVORRICHTUNG FÜR EINEN FAHRZEUGSITZ UND FAHRZEUGSITZ**
LOCKING DEVICE FOR A VEHICLE SEAT AND VEHICLE SEAT
SYSTÈME DE VERROUILLAGE DESTINÉ À UN SIÈGE DE VÉHICULE ET SIÈGE DE VÉHICULE

(30) Priorität: 31.07.2012 DE 102012015236; 17.10.2012 DE 102012020269
(43) Veröffentlichungstag der Anmeldung: 10.06.2015
(73) Patentinhaber: Adient Luxembourg Holding S.à r.l., 1855 Luxembourg (LU)
(72) Erfinder: CROSSLEY, Mark, Chelmsford, Essex CM1 2JZ (GB); GOWLI, Ramakant K., B12 Chinchwad Pune (IN); PUSHPARAJAN, Prasanth M., 51399 Burscheid (DE); SUDKE, Vinay K., Kothirud - Pune 411 038 (IN); UEZEK, Halil, 42105 Wuppertal (DE); WAYAL, Vikas, Kothirud - Pune 411038 (IN)
(74) Vertreter: Liedhegener, Ralf
(86) Internationale Anmeldenummer: PCT/EP2013/065723
(87) Internationale Veröffentlichungsnummer: WO 2014/019932

(56) Entgegenhaltungen:
- FR-A1- 2 782 483
- JP-A- H1 081 161
- US-A1- 2005 067 852

## Beschreibung

Die Erfindung betrifft eine Verriegelungsvorrichtung für einen Fahrzeugsitz mit den Merkmalen des Oberbegriffs des Anspruchs 1. Die Erfindung betrifft auch einen Fahrzeugsitz mit den Merkmalen des Anspruchs 15.

### Stand der Technik

Aus der WO 2004 / 069 585 A2 ist eine gattungsgemäße Verriegelungsvorrichtung bekannt. Zum Entriegeln der Verriegelungsvorrichtung ist ein Entriegelungsbolzen vorgesehen, welcher einstückig mit einem Sicherungselement der Verriegelungsvorrichtung ausgebildet ist. Durch Schwenken des Entriegelungsbolzens um einen als Schwenkachse wirkenden Lagerbolzen ist die Verriegelungsvorrichtung entriegelbar.

Zudem ist aus der FR 2 782 483 A1 ein Kraftfahrzeug-Kindersitz mit einem Rahmen und einem Sitzteil mit zwei Befestigungen bekannt, welche unabhängig an entsprechenden Fahrzeug-Aufbauten verriegelt werden können. Der Sitz weist ferner Anzeigeelemente auf, welche eine Verriegelungsposition der beiden Rahmenseitenbefestigungen anzeigen. Diese Anzeigeelemente sind derart miteinander gekoppelt, dass die Verriegelungsposition nur dann angezeigt wird, wenn beide Rahmenbefestigungselemente mit den Fahrzeug-Aufbauten verriegelt sind.

Für einen Benutzer des Fahrzeugsitzes ist es äußerst wichtig, dass alle Verriegelungsvorrichtungen des Fahrzeugsitzes vollständig verriegelt sind. Ansonsten kann sich der Fahrzeugsitz bei einem Crash von der Fahrzeugstruktur lösen, was zu Verletzungen des Benutzers führen kann. Eine Anzeige des Verriegelungszustandes der Verriegelungsvorrichtung ist daher für den Benutzer hilfreich.

An der Winkelstellung des Entriegelungsbolzens ist der Verriegelungszustand der Verriegelungsvorrichtung erkennbar. Der Entriegelungsbolzen zeigt also an, ob die Verriegelungsvorrichtung verriegelt oder entriegelt ist.

Der Entriegelungsbolzen ist jedoch im Vergleich zu der Verriegelungsvorrichtung und zu dem Fahrzeugsitz verhältnismäßig klein. Ferner sind die Entriegelungsbolzen der einzelnen Verriegelungsvorrichtungen unterhalb des Sitzteils des Fahrzeugsitzes an verhältnismäßig schwer einsehbaren Stellen angeordnet. Somit ist der Verriegelungszustand der Verriegelungsvorrichtungen relativ schwer optisch erkennbar. Insbesondere ist es schwer, den Verriegelungszustand mehrerer Verriegelungsvorrichtungen eines Fahrzeugsitzes gleichzeitig wahrzunehmen.

Aus der DE 10 2004 060 565 A1 ist eine Verriegelungsvorrichtung bekannt, welche einen Verriegelungsanzeiger und einen Entriegelungsanzeiger zur Anzeige des Verriegelungszustandes der Verriegelungsvorrichtung aufweist.

### Aufgabe

Der Erfindung liegt die Aufgabe zu Grunde, eine Verriegelungsvorrichtung für einen Fahrzeugsitz der eingangs genannten Art zu verbessern, insbesondere die Sichtbarkeit der Anzeige des Verriegelungszustandes der Verriegelungsvorrichtung zu erhöhen.

### Lösung

Diese Aufgabe wird erfindungsgemäß durch eine Verriegelungsvorrichtung mit den im Anspruch 1 genannten Merkmalen gelöst. Vorteilhafte Ausgestaltungen, welche einzeln oder in Kombination miteinander eingesetzt werden können, sind Gegenstand der Unteransprüche.

Eine gattungsgemäße Verriegelungsvorrichtung für einen Fahrzeugsitz umfasst eine Anzeigevorrichtung zur Anzeige des Verriegelungszustandes der Verriegelungsvorrichtung, wobei die Anzeigevorrichtung mindestens einen Verriegelungsanzeiger, welcher bei verriegelter Verriegelungsvorrichtung sichtbar ist, und mindestens einen Entriegelungsanzeiger, welcher bei entriegelter Verriegelungsvorrichtung sichtbar ist, aufweist, wobei die Anzeigevorrichtung mindestens einen Indikatorarm aufweist, welcher sich bei verriegelter Verriegelungsvorrichtung in Verriegelungsposition befindet, und welcher sich bei entriegelter Verriegelungsvorrichtung in Entriegelungsposition befindet, wobei der Indikatorarm einen Anzeigebereich umfasst, welcher einen ersten Verriegelungsanzeiger und einen ersten Entriegelungsanzeiger aufweist.

Erfindungsgemäß ist die Verriegelungsvorrichtung mittels eines Halteblechs an dem Fahrzeugsitz befestigbar, wobei an dem Halteblech ein zweiter Entriegelungsanzeiger vorgesehen, welcher von dem in Verriegelungsposition befindlichen Indikatorarm verdeckt wird.

Dadurch ist sowohl der verriegelte Verriegelungszustand der Verriegelungsvorrichtung als auch der entriegelte Verriegelungszustand der Verriegelungsvorrichtung jeweils explizit optisch wahrnehmbar. Der entriegelte Verriegelungszustand der Verriegelungsvorrichtung ist dabei an zwei verschiedenen Stellen, nämlich an dem ersten Entriegelungsanzeiger sowie an dem zweiten Entriegelungsanzeiger wahrnehmbar.

Insbesondere bei entsprechender farblicher Kennzeichnung, vorzugsweise indem der mindestens eine Verriegelungsanzeiger als mit grüner Farbe versehene Fläche ausgeführt ist, und/oder indem der mindestens eine Entriegelungsanzeiger als mit roter Farbe versehene Fläche ausgeführt ist, ist die Sichtbarkeit der Anzeige des Verriegelungszustandes der Verriegelungsvorrichtung vorteilhaft erhöht.

Vorteilhaft ist dabei der mindestens eine Verriegelungsanzeiger bei entriegelter Verriegelungsvorrichtung verdeckt.

Ebenso ist vorteilhaft der mindestens eine Entriegelungsanzeiger bei verriegelter Verriegelungsvorrichtung verdeckt.

Vorzugsweise ist der Indikatorarm dabei von seiner Verriegelungsposition in seine Entriegelungsposition schwenkbar gelagert.

Gemäß einer weiteren vorteilhaften Ausgestaltung der Erfindung ist an dem Halteblech ein zweiter Verriegelungsanzeiger vorgesehen, welcher von dem in Entriegelungsposition befindlichen Indikatorarm verdeckt wird.

Vorzugsweise sind der zweite Verriegelungsanzeiger und der zweite Entriegelungsanzeiger auf gegenüberliegenden Seiten des Halteblechs angeordnet.

Vorteilhaft wird dabei der erste Verriegelungsanzeiger bei in Entriegelungsposition befindlichem Indikatorarm von dem Halteblech verdeckt.

Ebenso wird vorteilhaft, zusätzlich oder alternativ, der erste Entriegelungsanzeiger bei in Verriegelungsposition befindlichem Indikatorarm von dem Halteblech verdeckt.

Vorzugsweise sind der erste Verriegelungsanzeiger und der erste Entriegelungsanzeiger auf gegenüberliegenden Seiten des Anzeigebereichs angeordnet.

Gemäß einer vorteilhaften Weiterbildung der Erfindung ist in dem Halteblech eine Durchgangsöffnung ausgebildet, mit welcher der Anzeigebereich fluchtet.

Wenn der Indikatorarm sich in Verriegelungsposition befindet, so befindet er sich außerhalb der Durchgangsöffnung.

Wenn der Indikatorarm sich in Entriegelungsposition befindet, so durchragt er die Durchgangsöffnung.

Zum Entriegeln der Verriegelungsvorrichtung ist vorteilhaft ein Entriegelungshebel vorgesehen, welcher mit dem Indikatorarm auf Mitnahme gekoppelt ist.

Vorzugsweise sind der Indikatorarm und der Entriegelungshebel dabei um parallel verlaufende Achsen schwenkbar.

Die Aufgabe wird auch durch einen Fahrzeugsitz gelöst, welcher mindestens eine erfindungsgemäße Verriegelungsvorrichtung umfasst.

### Figuren und Ausführungsformen der Erfindung

Im Folgenden ist die Erfindung anhand von in den Zeichnungen dargestellten vorteilhaften Ausführungsbeispielen näher erläutert. Die Erfindung ist jedoch nicht auf diese Ausführungsbeispiele beschränkt. Es zeigen:
- Fig. 1:: einen Längsschnitt durch einen Fahrzeugsitz in Tumble-Position,
- Fig. 2:: eine Seitenansicht des Fahrzeugsitzes aus Fig. 1 in Tumble-Position,
- Fig. 3:: eine vergrößerte Darstellung des umrandeten Bereichs aus Fig. 1 bei verriegelter Verriegelungsvorrichtung,
- Fig. 4:: eine vergrößerte Darstellung des umrandeten Bereichs aus Fig. 1 bei entriegelter Verriegelungsvorrichtung,
- Fig. 5:: eine vergrößerte Darstellung des umrandeten Bereichs aus Fig. 2 bei verriegelter Verriegelungsvorrichtung,
- Fig. 6:: eine vergrößerte Darstellung des umrandeten Bereichs aus Fig. 2 bei entriegelter Verriegelungsvorrichtung und

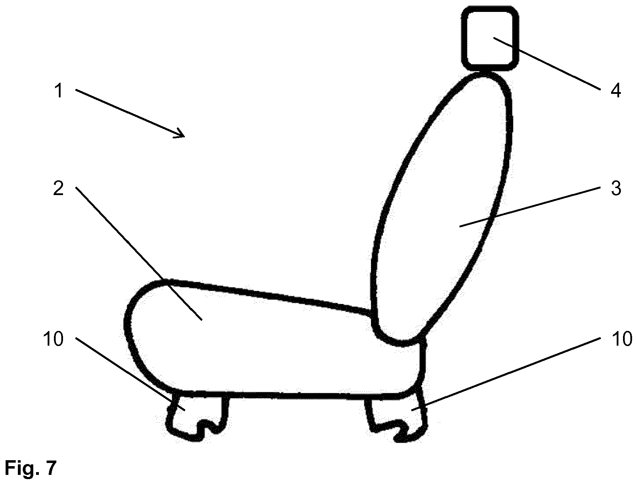

- Fig. 7:: eine schematische Darstellung eines Fahrzeugsitzes.

Ein Fahrzeugsitz 1 für ein Kraftfahrzeug weist ein Sitzteil 2 und eine daran angebrachte, relativ zu dem Sitzteil 2 klappbare Rückenlehne 3 auf. An der dem Sitzteil 2 abgewandten Ende der Rückenlehne 3 ist dabei eine Kopfstütze 4 angeordnet.

Die Anordnung des Fahrzeugsitzes 1 innerhalb des Fahrzeugs und dessen gewöhnliche Fahrtrichtung definieren die im Folgenden verwendeten Richtungsangaben. Dabei wird eine senkrecht zum Erdboden orientierte Richtung im Folgenden als Vertikalrichtung bezeichnet und eine Richtung senkrecht zur Vertikalrichtung und senkrecht zur Fahrtrichtung wird im Folgenden als Querrichtung bezeichnet.

Der Fahrzeugsitz 1 ist mittels mehrerer Verriegelungsvorrichtungen 10 an der Fahrzeugstruktur befestigbar. Dabei sind zwei Verriegelungsvorrichtungen 10 in einem in Fahrtrichtung hinteren Bereich des Fahrzeugsitzes 1 vorgesehen, wobei je eine dieser Verriegelungsvorrichtungen 10 in Fahrtrichtung rechts und die andere dieser Verriegelungsvorrichtungen 10 in Fahrtrichtung links angeordnet ist. Ebenso sind zwei weitere Verriegelungsvorrichtungen 10 in einem in Fahrtrichtung vorderen Bereich des Fahrzeugsitzes 1 vorgesehen, wobei je eine dieser Verriegelungsvorrichtungen 10 in Fahrtrichtung rechts und die andere dieser Verriegelungsvorrichtungen 10 in Fahrtrichtung links angeordnet ist.

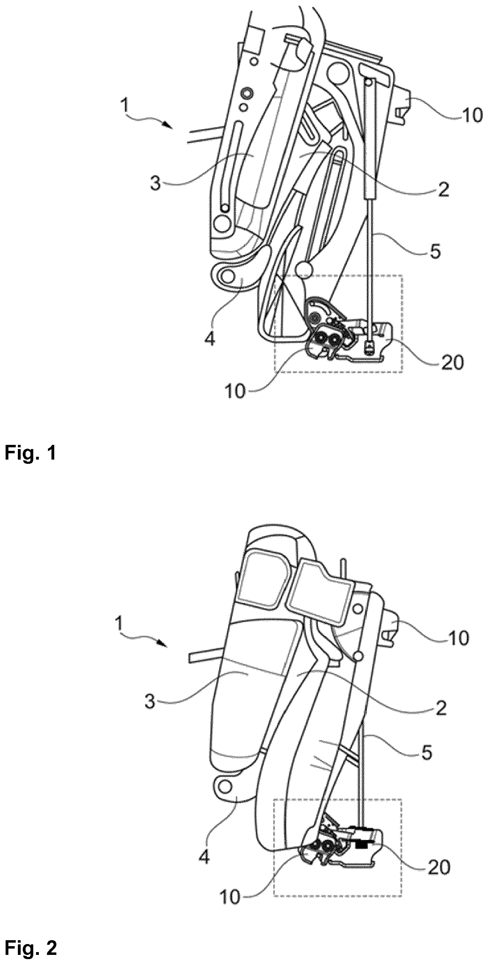

Bei dem hier beschriebenen Fahrzeugsitz 1 handelt es sich um einen Sitz in einer zweiten Sitzreihe eines Fahrzeugs. In Fig. 1 ist dabei ein Schnitt durch den Fahrzeugsitz 1 senkrecht zur Querrichtung dargestellt, wobei die in Fahrtrichtung rechts angeordneten Verriegelungsvorrichtungen 10 sichtbar sind. In Fig. 2 ist eine Seitenansicht des Fahrzeugsitzes 1 dargestellt, wobei die in Fahrtrichtung links angeordneten Verriegelungsvorrichtungen 10 sichtbar sind.

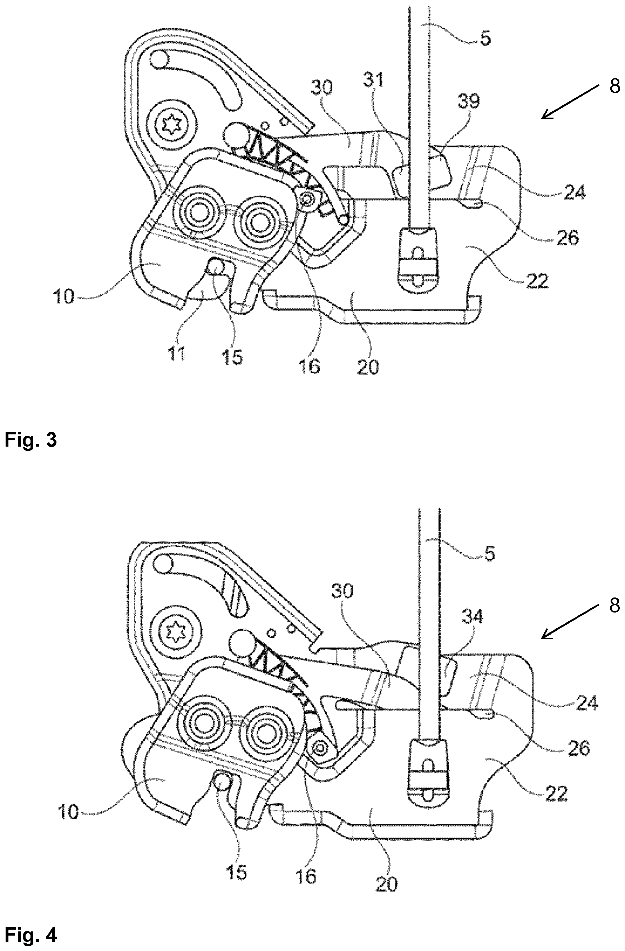

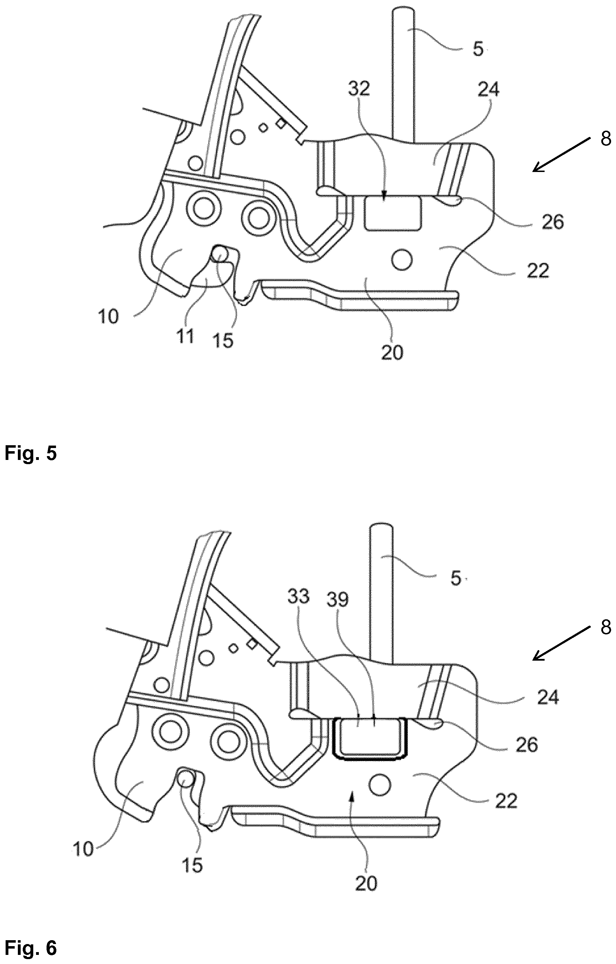

In Fig. 3 und Fig. 4 ist jeweils die im vorderen Bereich des Fahrzeugsitzes 1 in Fahrtrichtung rechts angeordnete Verriegelungsvorrichtung 10 dargestellt, und in Fig. 5 und Fig. 6 ist jeweils die im vorderen Bereich des Fahrzeugsitzes 1 in Fahrtrichtung links angeordnete Verriegelungsvorrichtung 10 dargestellt. Bei allen hier gezeigten Darstellungen ist die Blickrichtung gleich, nämlich jeweils in Querrichtung, nach rechts zur Fahrtrichtung.

Im verriegelten Zustand umgreift dabei eine Klinke 11 der Verriegelungsvorrichtung 10 einen an der Fahrzeugstruktur angeordneten Bolzen 15. Im entriegelten Zustand der Verriegelungsvorrichtung 10 ist die Klinke 11 um eine in Querrichtung verlaufende Achse weggeschwenkt und gibt den Bolzen 15 frei. Zum Entriegeln wird ein an einem nicht dargestellten Sicherungselement befestigter Entriegelungshebel 16 um eine in Querrichtung verlaufende Achse geschwenkt, wodurch das Sicherungselement die Klinke 11 frei gibt. Eine derartige Verriegelungsvorrichtung 10 ist beispielsweise in der WO 2004 / 069 585 A2 beschrieben.

Ausgehend von einer gewöhnlichen Fahrposition kann die Rückenlehne 3 auf das Sitzteil 2 geklappt werden. Durch anschließendes Entriegeln der hinteren Verriegelungsvorrichtungen 10 kann der hintere Bereich des Fahrzeugsitzes 1 hochgeschwenkt und in eine Tumble-Position überführt werden, wie in Fig. 1 und Fig. 2 dargestellt. Eine Gasdruckfeder 5 hält den Fahrzeugsitz 1 in der Tumble-Position.

Durch Entriegeln der beiden vorderen Verriegelungsvorrichtungen 10, auf welche im Folgenden näher eingegangen wird, in der Tumble-Position ist der Fahrzeugsitz 1 von der Fahrzeugstruktur lösbar und aus dem Fahrzeug entnehmbar.

Die beiden vorderen Verriegelungsvorrichtungen 10 sind vorliegend spiegelsymmetrisch bezüglich einer senkrecht zur Querrichtung verlaufenden Ebene aufgebaut. Es ist auch denkbar, die beiden hinteren Verriegelungsvorrichtungen 10 ebenso zu gestalten wie die beiden vorderen Verriegelungsvorrichtungen 10.

Die beiden vorderen Verriegelungsvorrichtungen 10, weisen je eine Anzeigevorrichtung 8 auf, welche den Verriegelungszustand der jeweiligen Verriegelungsvorrichtung 10 anzeigt. Die Anzeigevorrichtung 8 zeigt somit an, ob die jeweilige Verriegelungsvorrichtung 10 verriegelt oder entriegelt ist.

Jede der vorderen Verriegelungsvorrichtungen 10 ist mittels eines Halteblechs 20 an dem Fahrzeugsitz 1 befestigt. An dem Halteblech 20 ist auch ein Ende der Gasdruckfeder 5 angebracht. Das Halteblech 20 erstreckt sich vorwiegend in Längsrichtung und in Vertikalrichtung.

Das Halteblech 20 umfasst einen in Vertikalrichtung unten befindlichen Haltebereich 22, an welchem die Gasdruckfeder 5 befestigt ist, und einen in Vertikalrichtung oben befindlichen Funktionsbereich 24, welcher relativ zu dem Haltebereich 22 in Querrichtung versetzt ist. Zwischen dem Funktionsbereich 24 und dem Haltebereich 22 ist somit, in Vertikalrichtung gesehen, eine Durchgangsöffnung 26 ausgebildet.

Die Anzeigevorrichtung 8 weist einen Indikatorarm 30 auf, welcher um eine in Querrichtung verlaufende Achse schwenkbar an dem Halteblech 20 gelagert ist. Die Achse, um welche die Klinke 11 schwenkbar ist, die Achse, um welche der Entriegelungshebel 16 schwenkbar ist, und die Achse, um welche der Indikatorarm 30 schwenkbar ist, verlaufen somit parallel zueinander in Querrichtung.

Der Indikatorarm 30 und der Entriegelungshebel 16 sind auf Mitnahme gekoppelt, vorliegend mittels einer Schlitz-Zapfen-Führung. An dem seiner Drehachse abgewandten Ende des Indikatorarms 30 ist ein Anzeigebereich 39 vorgesehen, welcher in Querrichtung gesehen mit der Durchgangsöffnung 26 des Halteblechs 20 fluchtet.

Bei verriegelter Verriegelungsvorrichtung 10, wie in Fig. 3 und Fig. 5 dargestellt, befindet sich der Indikatorarm 30 in Verriegelungsposition, wobei der Anzeigebereich 39 sich in Vertikalrichtung etwa in gleicher Höhe wie der Funktionsbereich 24 des Halteblechs 20 und oberhalb der Durchgangsöffnung 26 befindet. Der in Verriegelungsposition befindliche Indikatorarm 30 befindet sich somit außerhalb der Durchgangsöffnung 26.

Bei entriegelter Verriegelungsvorrichtung 10, wie in Fig. 4 und Fig. 6 dargestellt, befindet sich der Indikatorarm 30 in Entriegelungsposition, wobei der Anzeigebereich 39 in die Durchgangsöffnung 26 eintaucht und sich in Vertikalrichtung unterhalb des Funktionsbereichs 24 und etwa in gleicher Höhe wie der Haltebereich 22 des Halteblechs 20 befindet. Der in Entriegelungsposition befindliche Indikatorarm 30 durchragt somit die Durchgangsöffnung 26.

Auf der in Querrichtung nach innen weisenden, also zur Mitte des Fahrzeugsitzes hin gerichteten Seite weist der Anzeigebereich 39 einen ersten Verriegelungsanzeiger 31 auf, welcher in Fig. 3 sichtbar ist. Auf der in Querrichtung nach außen weisenden, also der Mitte des Fahrzeugsitzes abgewandten, Seite weist der Anzeigebereich 39 einen ersten Entriegelungsanzeiger 33 auf, welche in Fig. 6 sichtbar ist.

Auf der in Querrichtung nach innen weisenden Seite weist der Funktionsbereich 24 einen zweiten Entriegelungsanzeiger 34 auf, welcher in Fig. 4 sichtbar ist. Auf der in Querrichtung nach außen weisenden Seite weist der Haltebereich 22 einen zweiten Verriegelungsanzeiger 32 auf, welcher in Fig. 5 sichtbar ist.

Die Verriegelungsanzeiger 31, 32 sind vorliegend als mit grüner Farbe versehene Flächen ausgeführt und zeigen an, dass der Fahrzeugsitz 1 an der Fahrzeugstruktur befestigt ist. Die Entriegelungsanzeiger 33, 34 sind vorliegend als mit roter Farbe versehene Flächen ausgeführt und zeigen an, dass der Fahrzeugsitz 1 von der Fahrzeugstruktur lösbar ist.

Bei verriegelter Verriegelungsvorrichtung 10 und in Verriegelungsposition befindlichem Indikatorarm 30 ist somit in Querrichtung von innen gesehen der erste Verriegelungsanzeiger 31 auf dem Anzeigebereich 39 des Indikatorarms 30 sichtbar, wie in Fig. 3 dargestellt, und in Querrichtung von außen gesehen ist der zweite Verriegelungsanzeiger 32 auf dem Haltebereich 22 des Halteblechs 20 sichtbar, wie in Fig. 5 dargestellt. Der zweite Entriegelungsanzeiger 34 ist dabei von dem Anzeigebereich 39 des Indikatorarms 30 verdeckt und der erste Entriegelungsanzeiger 33 ist dabei von dem Funktionsbereich 24 des Halteblechs 20 verdeckt.

Bei entriegelter Verriegelungsvorrichtung 10 und in Entriegelungsposition befindlichem Indikatorarm 30 ist somit in Querrichtung von außen gesehen der erste Entriegelungsanzeiger 33 auf dem Anzeigebereich 39 des Indikatorarms 30 sichtbar, wie in Fig. 6 dargestellt, und in Querrichtung von innen gesehen ist der zweite Entriegelungsanzeiger 34 auf dem Funktionsbereich 24 des Halteblechs 20 sichtbar, wie in Fig. 4 dargestellt. Der zweite Verriegelungsanzeiger 32 ist dabei von dem Anzeigebereich 39 des Indikatorarms 30 verdeckt und der erste Verriegelungsanzeiger 31 ist dabei von dem Haltebereich 22 des Halteblechs 20 verdeckt.

### Bezugszeichenliste

- 1: Fahrzeugsitz
- 2: Sitzteil
- 3: Rückenlehne
- 4: Kopfstütze
- 5: Gasdruckfeder
- 8: Anzeigevorrichtung
- 10: Verriegelungsvorrichtung
- 11: Klinke
- 15: Bolzen
- 16: Entriegelungshebel
- 20: Halteblech
- 22: Haltebereich
- 24: Funktionsbereich
- 26: Durchgangsöffnung
- 30: Indikatorarm
- 31: erster Verriegelungsanzeiger
- 32: zweiter Verriegelungsanzeiger
- 33: erster Entriegelungsanzeiger
- 34: zweiter Entriegelungsanzeiger
- 39: Anzeigebereich

## Patentansprüche

1. Verriegelungsvorrichtung (10) für einen Fahrzeugsitz (1), umfassend eine Anzeigevorrichtung (8) zur Anzeige des Verriegelungszustandes der Verriegelungsvorrichtung (10),wobei die Anzeigevorrichtung (8) mindestens einen Verriegelungsanzeiger (31, 32), welcher bei verriegelter Verriegelungsvorrichtung (10) sichtbar ist, und mindestens einen Entriegelungsanzeiger (33, 34), welcher bei entriegelter Verriegelungsvorrichtung (10) sichtbar ist, aufweist, wobei die Anzeigevorrichtung (8) mindestens einen Indikatorarm (30) aufweist, welcher sich bei verriegelter Verriegelungsvorrichtung (10) in Verriegelungsposition befindet, und welcher sich bei entriegelter Verriegelungsvorrichtung (10) in Entriegelungsposition befindet, wobei der Indikatorarm (30) einen Anzeigebereich (39) umfasst, welcher einen ersten Verriegelungsanzeiger (31) und einen ersten Entriegelungsanzeiger (33) aufweist,
**dadurch gekennzeichnet, dass**
die Verriegelungsvorrichtung (10) mittels eines Halteblechs (20) an dem Fahrzeugsitz (1) befestigbar ist, wobei an dem Halteblech (20) ein zweiter Entriegelungsanzeiger (34) vorgesehen ist, welcher von dem in Verriegelungsposition befindlichen Indikatorarm (30) verdeckt wird.

2. Verriegelungsvorrichtung (10) nach Anspruch 1, **dadurch gekennzeichnet, dass** der mindestens eine Verriegelungsanzeiger (31, 32) bei entriegelter Verriegelungsvorrichtung (10) verdeckt ist.

3. Verriegelungsvorrichtung (10) nach einem der vorstehenden Ansprüche,
**dadurch gekennzeichnet, dass** der mindestens eine Entriegelungsanzeiger (33, 34) bei verriegelter Verriegelungsvorrichtung (10) verdeckt ist.

4. Verriegelungsvorrichtung (10) nach einem der vorstehenden Ansprüche,
**dadurch gekennzeichnet, dass** der Indikatorarm (30) von seiner Verriegelungsposition in seine Entriegelungsposition schwenkbar gelagert ist.

5. Verriegelungsvorrichtung (10) nach einem der vorstehenden Ansprüche,
**dadurch gekennzeichnet, dass** an dem Halteblech (20) ein zweiter Verriegelungsanzeiger (32) vorgesehen ist, welcher von dem in Entriegelungsposition befindlichen Indikatorarm (30) verdeckt wird.

6. Verriegelungsvorrichtung (10) nach Anspruch 5, **dadurch gekennzeichnet, dass** der zweite Verriegelungsanzeiger (32) und der zweite Entriegelungsanzeiger (34) auf gegenüberliegenden Seiten des Halteblechs (20) angeordnet sind.

7. Verriegelungsvorrichtung (10) nach einem der vorstehenden Ansprüche,
**dadurch gekennzeichnet, dass** der erste Verriegelungsanzeiger (31) bei in Entriegelungsposition befindlichem Indikatorarm (30) von dem Halteblech (20) verdeckt wird.

8. Verriegelungsvorrichtung (10) nach einem der vorstehenden Ansprüche,
**dadurch gekennzeichnet, dass** der erste Entriegelungsanzeiger (33) bei in Verriegelungsposition befindlichem Indikatorarm (30) von dem Halteblech (20) verdeckt wird.

9. Verriegelungsvorrichtung (10) nach einem der vorstehenden Ansprüche,
**dadurch gekennzeichnet, dass** der erste Verriegelungsanzeiger (31) und der erste Entriegelungsanzeiger (33) auf gegenüberliegenden Seiten des Anzeigebereichs (39) angeordnet sind.

10. Verriegelungsvorrichtung (10) nach einem der vorstehenden Ansprüche,
**dadurch gekennzeichnet, dass** in dem Halteblech (20) eine Durchgangsöffnung (26) ausgebildet ist, mit welcher der Anzeigebereich (39) fluchtet.

11. Verriegelungsvorrichtung (10) nach Anspruch 10, **dadurch gekennzeichnet, dass** der in Verriegelungsposition befindliche Indikatorarm (30) sich außerhalb der Durchgangsöffnung (26) befindet.

12. Verriegelungsvorrichtung (10) nach einem der Ansprüche 10 bis 11, **dadurch gekennzeichnet, dass** der in Entriegelungsposition befindliche Indikatorarm (30) die Durchgangsöffnung (26) durchragt.

13. Verriegelungsvorrichtung (10) nach einem der vorstehenden Ansprüche,
**dadurch gekennzeichnet, dass** zum Entriegeln der Verriegelungsvorrichtung (10) ein Entriegelungshebel (16) vorgesehen ist, welcher mit dem Indikatorarm (30) auf Mitnahme gekoppelt ist.

14. Verriegelungsvorrichtung (10) nach Anspruch 13, **dadurch gekennzeichnet, dass** der Indikatorarm (30) und der Entriegelungshebel (16) um parallel verlaufende Achsen schwenkbar sind.

15. Fahrzeugsitz (1), umfassend mindestens eine Verriegelungsvorrichtung (10) nach einem der vorstehenden Ansprüche.

## Claims

1. Locking device (10) for a vehicle seat (1) comprising a display device (8) for indicating the locking state of the locking device (10), wherein the display device (8) has at least one locking indicator (31, 32) which is visible when the locking device (10) is locked, and at least one unlocking indicator (33, 34), which is visible when the locking device (10) is unlocked, wherein the display device (8) has at least one indicator arm (30) which is located in a locking position when the locking device (10) is locked and which is located in an unlocking position when the locking device (10) is unlocked, wherein the indicator arm (30) comprises a display region (39) which has a first locking indicator (31) and a first unlocking indicator (33),
**characterized in that**
the locking device (10) can be secured to the vehicle seat (1) by means of a metal retention sheet (20), wherein there is provided on the metal retention sheet (20) a second unlocking indicator (34) which is covered by the indicator arm (30) which is located in the locking position.

2. Locking device (10) according to Claim 1,
**characterized in that** the at least one locking indicator (31, 32) is covered when the locking device (10) is unlocked.

3. Locking device (10) according to either of the preceding claims, **characterized in that** the at least one unlocking indicator (33, 34) is covered when the locking device (10) is locked.

4. Locking device (10) according to one of the preceding claims, **characterized in that** the indicator arm (30) is supported so as to be able to pivot from the locking position into the unlocking position thereof.

5. Locking device (10) according to one of the preceding claims, **characterized in that** there is provided on the metal retention sheet (20) a second locking indicator (32) which is covered by the indicator arm (30) which is located in the unlocking position.

6. Locking device (10) according to Claim 5, **characterized in that** the second locking indicator (32) and the second unlocking indicator (34) are arranged at opposing sides of the metal retention sheet (20).

7. Locking device (10) according to one of the preceding claims, **characterized in that** the first locking indicator (31) is covered by the metal retention sheet (20) when the indicator arm (30) is located in the unlocking position.

8. Locking device (10) according to one of the preceding claims, **characterized in that** the first unlocking indicator (33) is covered by the metal retention sheet (20) when the indicator arm (30) is located in the locking position.

9. Locking device (10) according to one of the preceding claims, **characterized in that** the first locking indicator (31) and the first unlocking indicator (33) are arranged at opposing sides of the display region (39).

10. Locking device (10) according to one of the preceding claims, **characterized in that** there is formed in the metal retention sheet (20) a through-opening (26) with which the display region (39) is in alignment.

11. Locking device (10) according to Claim 10,
**characterized in that** the indicator arm (30) which is located in the locking position is located outside the through-opening (26).

12. Locking device (10) according to either of Claims 10 and 11, **characterized in that** the indicator arm (30) which is located in the unlocking position protrudes through the through-opening (26).

13. Locking device (10) according to one of the preceding claims, **characterized in that**, in order to unlock the locking device (10), there is provided an unlocking lever (16) which is coupled to the indicator arm (30) so as to be carried therewith.

14. Locking device (10) according to Claim 13,
**characterized in that** the indicator arm (30) and the unlocking lever (16) can be pivoted about axes which extend in a parallel manner.

15. Vehicle seat (1) comprising at least one locking device (10) according to one of the preceding claims.

## Revendications

1. Dispositif de verrouillage (10) pour un siège de véhicule (1), comprenant un dispositif d'affichage (8) pour l'affichage de l'état de verrouillage du dispositif de verrouillage (10), le dispositif d'affichage (8) présentant au moins un indicateur de verrouillage (31, 32) qui est visible lorsque le dispositif de verrouillage (10) est verrouillé, et au moins un indicateur de déverrouillage (33, 34) qui est visible lorsque le dispositif de verrouillage (10) est déverrouillé, le dispositif d'affichage (8) présentant au moins un bras indicateur (30) qui se trouve dans la position de verrouillage lorsque le dispositif de verrouillage (10) est verrouillé et qui se trouve dans la position de déverrouillage lorsque le dispositif de verrouillage (10) est déverrouillé, le bras indicateur (30) comprenant une zone d'affichage (39) qui présente un premier indicateur de verrouillage (31) et un premier indicateur de déverrouillage (33),
**caractérisé en ce que**
le dispositif de verrouillage (10) peut être fixé au siège de véhicule (1) au moyen d'une tôle de retenue (20), un deuxième indicateur de déverrouillage (34) étant prévu sur la tôle de retenue (20), lequel est recouvert par le bras indicateur (30) se trouvant dans la position de verrouillage.

2. Dispositif de verrouillage (10) selon la revendication 1, **caractérisé en ce que** l'au moins un indicateur de verrouillage (31, 32) est recouvert lorsque le dispositif de verrouillage (10) est déverrouillé.

3. Dispositif de verrouillage (10) selon l'une quelconque des revendications précédentes, **caractérisé en ce que** l'au moins un indicateur de déverrouillage (33, 34) est recouvert lorsque le dispositif de verrouillage (10) est verrouillé.

4. Dispositif de verrouillage (10) selon l'une quelconque des revendications précédentes, **caractérisé en ce que** le bras indicateur (30) est supporté de manière à pouvoir pivoter de sa position de verrouillage dans sa position de déverrouillage.

5. Dispositif de verrouillage (10) selon l'une quelconque des revendications précédentes, **caractérisé en ce qu'**un deuxième indicateur de verrouillage (32) est prévu sur la tôle de retenue (20), lequel est recouvert par le bras indicateur (30) se trouvant dans la position de déverrouillage.

6. Dispositif de verrouillage (10) selon la revendication 5, **caractérisé en ce que** le deuxième indicateur de verrouillage (32) et le deuxième indicateur de déverrouillage (34) sont disposés sur des côtés opposés de la tôle de retenue (20).

7. Dispositif de verrouillage (10) selon l'une quelconque des revendications précédentes, **caractérisé en ce que** le premier indicateur de verrouillage (31) est recouvert par la tôle de retenue (20) lorsque le bras indicateur (30) se trouve dans la position de déverrouillage.

8. Dispositif de verrouillage (10) selon l'une quelconque des revendications précédentes, **caractérisé en ce que** le premier indicateur de déverrouillage (33) est recouvert par la tôle de retenue (20) lorsque le bras indicateur (30) se trouve dans la position de verrouillage.

9. Dispositif de verrouillage (10) selon l'une quelconque des revendications précédentes, **caractérisé en ce que** le premier indicateur de verrouillage (31) et le premier indicateur de déverrouillage (33) sont disposés sur des côtés opposés de la zone d'affichage (39).

10. Dispositif de verrouillage (10) selon l'une quelconque des revendications précédentes, **caractérisé en ce qu'**une ouverture de passage (26) est réalisée dans la tôle de retenue (20), laquelle est en affleurement avec la zone d'affichage (39).

11. Dispositif de verrouillage (10) selon la revendication 10, **caractérisé en ce que** le bras indicateur (30) se trouvant dans la position de verrouillage se trouve à l'extérieur de l'ouverture de passage (26).

12. Dispositif de verrouillage (10) selon l'une quelconque des revendications 10 et 11, **caractérisé en ce que** le bras indicateur (30) se trouvant dans la position de déverrouillage traverse l'ouverture de passage (26).

13. Dispositif de verrouillage (10) selon l'une quelconque des revendications précédentes, **caractérisé en ce que** pour le déverrouillage du dispositif de verrouillage (10), il est prévu un levier de déverrouillage (16) qui est accouplé au bras indicateur (30) par entraînement.

14. Dispositif de verrouillage (10) selon la revendication 13, **caractérisé en ce que** le bras indicateur (30) et le levier de déverrouillage (16) peuvent pivoter autour d'axes s'étendant parallèlement.

15. Siège de véhicule (1) comprenant au moins un dispositif de verrouillage (10) selon l'une quelconque des revendications précédentes.
